# EUROPEAN PATENT SPECIFICATION

(11) **EP 4 067 052 B1**
(45) Date of publication and mention of the grant of the patent: **25.10.2023**
(21) Application number: 21382263.8
(22) Date of filing: 30.03.2021
(51) Int. Cl.: B29C 65/18, B29C 65/30

(54) **SEALING TOOL OF A PACKAGING MACHINE**
VERSIEGELUNGSWERKZEUG EINER VERPACKUNGSMASCHINE
OUTIL DE SCELLAGE D'UNE MACHINE D'EMBALLAGE

(43) Date of publication of application: 05.10.2022
(73) Proprietor: Ulma Packaging, S.Coop., 20560 Oñati (ES)
(72) Inventor: MEDINA BALENCIAGA, Andoni, 20560 OÑATI (ES); IZQUIERDO EREÑO, Eneko, 20560 OÑATI (ES)
(74) Representative: Igartua, Ismael

(56) References cited:
- US-A- 4 736 568

## Description

### TECHNICAL FIELD

The present invention relates to sealing tools of packaging machines for packaging products.

### PRIOR ART

Packaging machines are used for generating packages from a base film and a cover film covering said base film.

Some packaging machines comprise a sealing station with an upper sealing tool and a lower sealing tool cooperating with one another for sealing the cover film to the base film, with the product already arranged on the base film, and a cutting station arranged downstream of the sealing station for cutting the cover film and the base film, with the final individual packages thereby being generated.

Some of these machines comprise a forming station upstream of the sealing station. The forming station comprises an upper forming tool and a lower forming tool with a specific configuration which cooperate with one another to impart shape to the base film and thereby generate cavities in the base film with the desired shape for housing the products to be packaged. To that end, the base film is arranged between both tools and is deformed by heat and pressure when the forming tools move closer to one another. Other machines dispense with the forming station, such that the sealing station receives the base film without cavities.

In the sealing station, the sealing between the cover film and the base film is performed by heat and pressure, such that the upper sealing tool of a sealing station comprises a box defining a closed contour with a lower base and is suitable for housing a sealing assembly formed by a sealing plate and a heating plate configured for heating the sealing plate. The sealing plate has a specific shape according to the package to be generated (or packages, if a plurality of them are generated simultaneously), and it is in charge of applying the heat which seals the cover film to the base film. The heating plate may comprise, for example, at least one electrical resistance which heats up to transmit heat to the sealing plate.

At least one of the upper and lower sealing tools of the sealing station is configured for moving closer to the other sealing tool until they cooperate with one another and the base film and the cover film are retained at least partially between both sealing tools. With both sealing tools being in that position, a closed space housing the product to be packaged arranged between said base film and said cover film is furthermore generated. The lower base of the box of the upper tool contacts the cover film while the lower sealing tool contacts the base film and both films are retained between said tools. The sealing assembly must be arranged in an initial operating position with respect to the box of the upper sealing tool, above the lower base of said box, and therefore, above the cover film, when the upper sealing tool and the lower sealing tool are cooperating with one another, so as to prevent unwanted contact with the cover film before sealing starts.

Each type of packaging operation has its peculiarities, so the box of the sealing tool, and particularly the sealing assembly associated with said box, must be adapted to the type of packaging operation at all times.

For example, in vacuum or modified atmosphere packaging operations, a vacuum and/or an injection of modified atmosphere is generated between the upper film and the lower film (with the sealing tools cooperating with one another). Once the required vacuum and/or modified atmosphere parameters are achieved, the sealing assembly moves from the initial operating position to a final operating position with respect to the box, and in said final operating position, the sealing plate presses the cover film against the base film and thereby heats the pressed cover film. This pressure and heating causes the pressed and heated areas of the cover film to seal to the base film. Once the cover film is sealed to the base film, the upper and lower tools separate from one another and the sealing assembly returns to its initial operating position to start a new cycle. In these cases, the distance between the lower base of the box and the sealing plate with the sealing assembly in the initial operating position allows the vacuum and/or the injection of modified atmosphere to be generated between the cover film and the base film (the greater the distance between the cover film held down by the box and the sealing plate, the shorter is the time needed to generate the vacuum and/or inject gas between both films), and the smaller the vertical distance between the lower base of the box and the sealing plate in the initial operating position, the shorter is the time needed to travel from said initial operating position to the final operating position, thereby reducing the time of movement from the initial operating position to the final operating position. Therefore, in vacuum or modified atmosphere packaging operations, finding a suitable compromise between the distance of the sealing plate with respect to the lower base of the box in the initial operating position determines the productivity of the machine. Based on the size of the packages to be generated, the height of the sealing assembly can vary, so while maintaining the same type of packaging operation (vacuum or modified atmosphere packaging operations), when the packages to be generated are modified, the box is replaced with another box suitable for the new packages, for the purpose of continuously maintaining the highest productivity of the machine.

In another type of packaging operations, such as skin packaging operations like the one disclosed in US2019375566A1, for example, the sealing assembly remains stationary during sealing. With the upper and lower sealing tools cooperating with one another, the cover film is drawn towards the sealing plate, where it is heated and driven towards the base film once heated. To draw the cover film towards the sealing plate, a vacuum is generated in the box above the cover film, causing said cover film to deform towards the sealing plate: the areas of the cover film held down by the lower base of the box remain immobile, whereas the rest of the cover film arranged inside the box deforms until it contacts the sealing plate. Therefore, at least the sealing plate requires holes through which the suction needed to generate this drawing is performed, so when changing the type of packaging operation, one box is replaced with another box suitable for the new type of packages.

In the skin packaging operation, once the cover film is heated against the sealing plate, an overpressure is generated in the box above the cover film driving said cover film against the base film and against the product. Due to the temperature acquired by the cover film and to the pressure generated above the cover film for driving it towards the base film, said cover film adheres or seals to said base film and takes the shape of the product arranged on said base film. For a correct skin packaging operation, it is advisable for the cover film to be uniformly heated, so the distance between the sealing plate and the lower base in the initial operating position (the vertical distance between the cover film held down by the lower base and the sealing plate) prevents said cover film from prolonged contact with the sealing plate in those areas of the sealing plate closest to the lower base of the box, in comparison with the contact time between the rest of the cover film and the rest of the areas of the sealing plate. Therefore, in skin packaging operations, the distance between the lower base of the box and the sealing plate in the initial operating position will determine the quality of the packaging operation of the machine. Like in the type of vacuum or modified atmosphere packaging operation, based on the size of the packages to be generated, the height of the sealing assembly may vary, so while maintaining the same type of packaging operation (skin packaging operation), when the packages to be generated are modified, the box is replaced with another box suitable for the new packages, for the purpose of continuously maintaining the described advantages.

US2019375566A1 discloses a skin packaging machine with a sealing station comprising an upper sealing tool and a lower sealing tool. The upper sealing tool comprises a box with an associated sealing assembly, and the box must be changed every time the type of packages to be generated or the type of packaging operation is changed.

US4736568A discloses a sealing tool of a packaging machine, comprising a box with a central axis, an inner wall defining a closed contour and a lower base, and a sealing assembly which is housed in the box and formed by at least one sealing plate comprising a lower surface and a heating plate configured for heating said sealing plate. The sealing plate and the heating plate are attached to one another. The initial position of a lower surface of the sealing plate of said sealing assembly can be adjusted in order to be arranged at a corresponding first predetermined distance with respect to the lower base of said box, with said sealing assembly in the initial operating position.

### DISCLOSURE OF THE INVENTION

The object of the invention is to provide a sealing tool of a packaging machine, as defined in the claims.

The machine comprises a sealing tool comprising a box and a sealing assembly which is housed in the box and formed by at least one sealing plate with a lower surface and a heating plate configured for heating the sealing plate. The box comprises an inner wall defining a closed contour and a lower base. Said sealing tool is an upper sealing tool, and the machine further comprises a lower sealing tool facing the sealing tool where a base film is supported, and the sealing assembly is configured for sealing a cover film which is arranged between both sealing tools to the base film. The sealing between the base film and the cover film is performed by pressure and heat. The heat is transmitted by the heating plate to the sealing plate, and by the sealing plate to the cover film. In some cases, said pressure is directly transmitted by the sealing plate to the cover film by contact (for example, in a vacuum or modified atmosphere packaging operation), and in other cases, an overpressure is generated above the cover film inside the box driving the cover film towards the base film (for example, in a skin packaging operation).

The heating plate is arranged in an initial position with respect to the box, on the sealing plate and attached to said sealing plate, with the sealing assembly in an initial operating position, and the lower surface of the sealing plate is arranged at a first distance, predetermined for said sealing plate, with respect to the lower base of the box, with said sealing assembly in the initial operating position.

The sealing plate and the heating plate are attached to one another in a detachable manner, such that the sealing plate of the sealing assembly can be replaced with another sealing plate, if so required.

The sealing tool comprises an adjustment mechanism configured for adjusting the initial position of the heating plate of the sealing assembly with respect to the box, such that the lower surface of the sealing plate of said sealing assembly is arranged at the corresponding first predetermined distance with respect to the lower base of said box, with said sealing assembly in the initial operating position.

The adjustment mechanism allows being able to adjust the distance between the lower base of the box and the sealing plate in a quick and simple manner, when a sealing plate is arranged in the machine and regardless of what said sealing plate may be involved, where a box with a sealing assembly in which the sealing plate is at the suitable distance with respect to said lower base of the box can be obtained, when said sealing assembly is in the initial operating position.

By incorporating the proposed adjustment mechanism, the packaging machine furthermore only requires the sealing plate to be replaced for changing the type of packaging operation to be performed and/or the type of package to be obtained, maintaining the original box and heating plate. This minimizes the amount of elements to be replaced for each case (a sealing plate as compared to an upper sealing tool or a sealing assembly), and makes the tasks of changing tools easier, resulting in a more cost-effective packaging machine and quicker and simpler changing operations.

The adjustment mechanism comprises a movable element attached with freedom of movement to the heating plate, said movable element being configured for being arranged in at least a first adjustment position and a second adjustment position with respect to said heating plate. Said movable element is configured for cooperating with the box in at least one of said adjustment positions, and each of said adjustment positions is associated with a corresponding initial position of said heating plate.

These and other advantages and features of the invention will become apparent in view of the figures and the detailed description of the invention.

### DESCRIPTION OF THE DRAWINGS

Figure 1 schematically shows, in a simplified manner, an embodiment of a packaging machine according to the invention.
Figure 2 is a section view of an embodiment of a sealing tool according to the invention, with a sealing plate and a movable element in an adjustment position.
Figure 3 is a section view of another embodiment of a sealing tool according to the invention, with a sealing plate different from that of Figure 2 and with the movable element in another adjustment position.
Figure 4 is a plan view of a heating plate of the sealing tool of Figure 2.
Figure 5 shows a perspective view of part of an adjustment mechanism of the sealing tool of Figure 2, associated with the heating plate of said sealing tool.
Figure 6 shows another perspective view of part of an adjustment mechanism of the sealing tool of Figure 2, associated with the heating plate of said sealing tool.
Figure 7 is a partial section view of an embodiment of a sealing tool according to the invention, in which an adjustment mechanism is shown in an adjustment position for a given sealing plate.
Figure 8 is a partial section view of another embodiment of a sealing tool according to the invention, in which an adjustment mechanism such as that of Figure 7 is shown in an adjustment position, for another given sealing plate.
Figure 9 is a partial section view of another embodiment of a sealing tool according to the invention, in which an adjustment mechanism is shown in an adjustment position for a given sealing plate.
Figure 10 is a partial section view of another embodiment of a sealing tool according to the invention, in which an adjustment mechanism such as that of Figure 9 is shown in an adjustment position, for another given sealing plate.
Figure 11 shows actuation means of an embodiment of a sealing tool according to the invention.
Figure 12 shows detachment means of an embodiment of a sealing tool according to the invention.

### DETAILED DISCLOSURE OF THE INVENTION

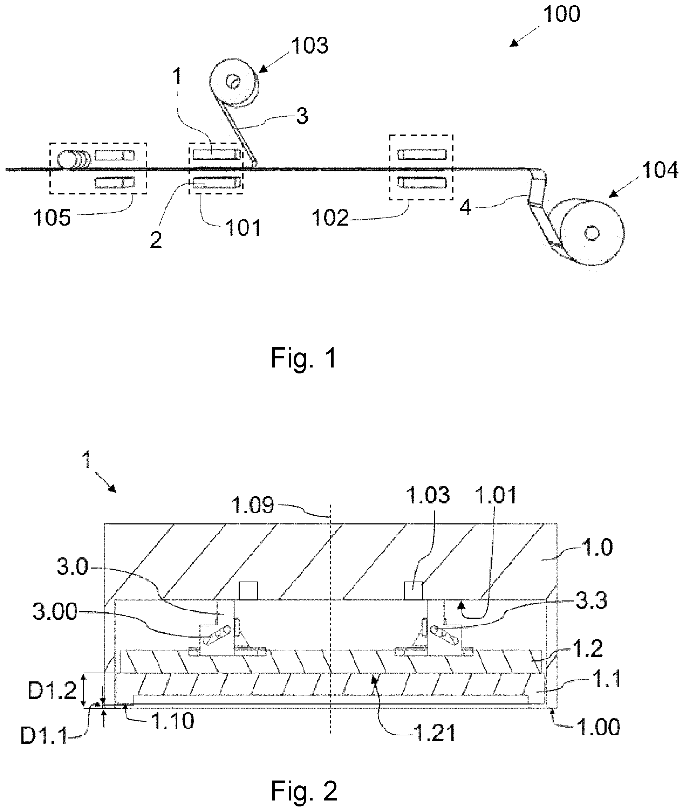

Figure 1 shows an embodiment of the packaging machine 100 according to the invention, which can be a thermoforming machine. The machine 100 comprises a sealing station 101 with an upper sealing tool 1 and a lower sealing tool 2 facing one another, configured for cooperating with one another and sealing a cover film 3 to at least one base film 4 (which may or may not be flat).

The machine 100 comprises a film feeder 103 configured for feeding a cover film 3 between the two sealing tools 1 and 2 of the sealing station 101, and the lower sealing tool 2 is configured for supporting the base film 4. When at least one of the sealing tools 1 and 2 moves towards the other sealing tool 1 and 2, both sealing tools 1 and 2 cooperate with one another such that at least the cover film 3 is retained between both sealing tools 1 and 2. The upper sealing tool 1 comprises a box 1.0 comprising a central axis 1.09, an inner wall 1.01 defining a closed contour and a lower base 1.00, as shown in the embodiment of Figure 2, said lower base 1.00 pressing the cover film 3 against the lower sealing tool 2. With the machine 100 in operation, the central axis 1.09 is vertical. The machine 100 may further comprise a film feeder 104 for feeding the base film 4, and a cutting station 105 downstream of the sealing station 101 for cutting the cover film 3 and the base film 4 and generating individual packages. In the case of a thermoforming machine 100 like the one depicted in Figure 1, the machine 100 further comprises a forming station 102 for forming the base film 4 and imparting the desired shape to the base (tray) of the packages to be obtained.

In any of the embodiments, the upper sealing tool 1 comprises a sealing assembly which is housed in the box 1.0 and formed by at least one sealing plate 1.1 comprising a lower surface 1.10 and a heating plate 1.2 configured for heating the sealing plate 1.1. The sealing plate 1.1 in turn transmits heat to the cover film 3 and causes it to adhere to the base film 4 by pressure, the packaging operation thus being performed. Before the sealing tools 1 and 2 cooperate with one another, the product to be packaged is arranged on the base film 4, such that when the cover film 3 is caused to seal or adhere to the base film 4, said product is packaged between said base film 4 and said cover film 3.

The machine 100 may also comprise a cutting tool, not depicted in the figures, for cutting the cover film 3 and the base film 4, such that individual packages are obtained. Each package will have a packaged product.

The heating plate 1.2 is arranged in an initial position with respect to the box 1.0, on the sealing plate 1.1, attached to said sealing plate 1.1, with the sealing assembly in an initial operating position. In the context of the invention, the initial operating position of the sealing assembly must be interpreted as the arrangement of said sealing assembly when it is ready to enable sealing to be performed (to enable sealing a cover film 3 to the base film 4). As described above, sealing can be performed in different ways.

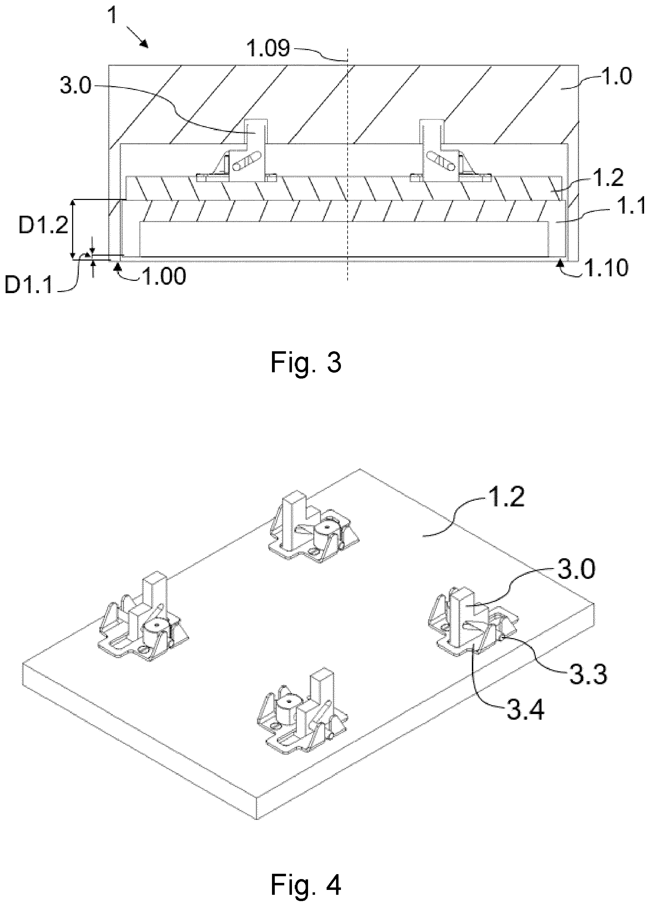

With the sealing assembly in the initial operating position as shown in the Figures 2 and 3, the lower surface 1.10 of the sealing plate 1.1 is at a first predetermined distance D1.1 associated with said particular sealing plate 1.1 with respect to the lower base 1.00 of the box 1.0. Based on which sealing plate 1.1 is involved, said first distance D1.1 can be different.

The sealing plate 1.1 and the heating plate 1.2 are attached to one another in a detachable manner, such that the sealing plate 1.1 of the sealing assembly can be replaced with another sealing plate 1.1. This enables replacing only the sealing plate 1.1 of the sealing assembly when the packaging operation to be performed is to be changed, instead of having to replace the entire sealing assembly (the sealing plate 1.1 and the heating plate 1.2) or the entire upper sealing tool 1. This allows having only spare sealing plates 1.1, instead of sealing assemblies or upper sealing tools 1, requiring a smaller storage space and a lower cost.

The sealing tool 1 comprises an adjustment mechanism configured for adjusting the initial position of the heating plate 1.2 of a sealing assembly with respect to the box 1.0, such that the lower surface 1.10 of the sealing plate 1.1 of said sealing assembly is arranged at the corresponding first predetermined distance D1.1 with respect to the lower base 1.00 of said box 1.0, with said sealing assembly in the initial operating position.

The adjustment mechanism is configured to enable arranging the heating plate 1.2 in a plurality of different initial positions, each initial position being associated with a given sealing plate 1.1. In each of said initial positions, a lower surface 1.21 of said heating plate 1.2 is arranged at a corresponding second distance D1.2 with respect to the lower base 1.00 of said box 1.0. Therefore, depending on the sealing plate 1.1 coupled to the heating plate 1.2, and in particular on the first distance D1.1 required for said sealing plate 1.1, the adjustment mechanism causes the heating plate 1.2 to be arranged in its corresponding initial position for said sealing plate 1.1. The adjustment mechanism makes the operations of changing the sealing plate 1.1 or maintaining the upper sealing tool 1 easier for the user, ensuring a correct arrangement of the corresponding sealing plate 1.1 with respect to the box 1.0 at all times, which increases the reliability of the machine 100 comprising said upper sealing tool 1 and reduces down times.

The adjustment mechanism comprises a movable element 3.0 which is attached with freedom of movement to the heating plate 1.2 (see Figure 4), said movable element 3.0 being configured for being arranged in at least a first adjustment position and a second adjustment position with respect to said heating plate 1.2. Each of said adjustment positions corresponds to an initial position of the heating plate 1.2. The movable element 3.0 is configured for cooperating with the box 1.0 in at least one of said adjustment positions, such that in at least said adjustment position the box 1.0 limits the second distance D1.2 associated with said heating plate 1.2, thereby limiting the first distance D1.1 associated with the sealing plate 1.1. Therefore, by directly adjusting the second distance D1.2 associated with said heating plate 1.2 of a sealing assembly, the first distance D1.1 of the sealing plate 1.1 of said sealing assembly is indirectly adjusted.

In some embodiments, the box 1.0 comprises a recess 1.03 in the inner wall 1.01 facing the movable element 3.0 and suitable for housing said movable element 3.0, at least partially, when said movable element 3.0 is in the first adjustment position or in the second adjustment position. Therefore, the box 1.0 prevents an additional movement of the heating plate 1.2 when the movable element 3.0 contacts the inner wall 1.01 of said box 1.0 (the movable element 3.0 being positioned in one of the adjustment positions), and allows an additional movement when the movable element 3.0 is housed at least partially in the recess 1.03 of the box 1.0 (the movable element 3.0 being positioned in another one of the adjustment positions): for example, when the recess 1.03 is arranged in an upper innerwall of the box 1.0 and the movable element 3.0 is introduced axially with respect to the central axis 1.09 of the box 1.0 into said recess 1.03 at least partially, the sealing assembly moves axially with respect to the central axis 1.09 of the box 1.0 of the sealing assembly by a distance equivalent to the distance said movable element 3.0 is introduced into the recess 1.03 of the box 1.0.

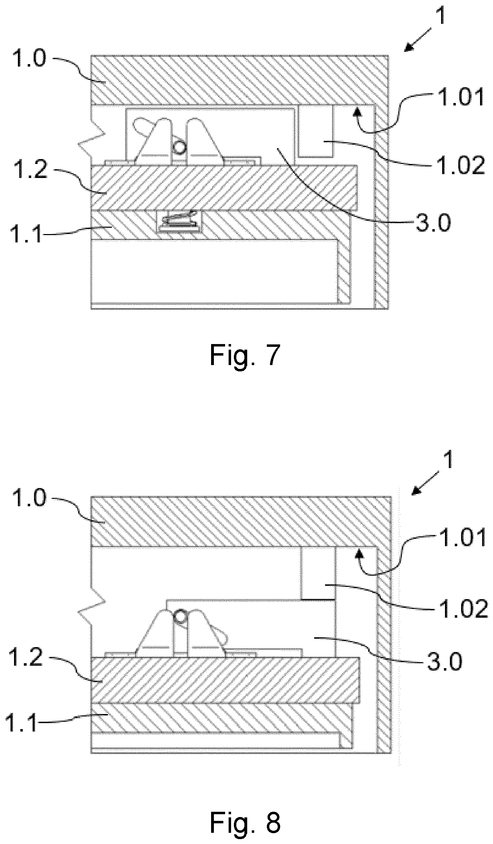

In some embodiments such as those shown in Figures 7 and 8, the box 1.0 comprises a protrusion 1.02 suitable for contacting the movable element 3.0 when said movable element 3.0 is in the first adjustment position or in the second adjustment position. Therefore, the protrusion 1.02 of the box 1.0 prevents the heating plate 1.2 from moving further when said protrusion 1.02 and the movable element 3.0 contact one another (the movable element 3.0 being positioned in one of the adjustment positions), and an additional movement of the heating plate 1.2 is allowed when the movable element 3.0 does not contact said protrusion 1.02 (the movable element 3.0 being positioned in another one of the adjustment positions): for example, when the protrusion 1.02 of the box 1.0 is arranged in an upper inner wall of said box 1.0 and the movable element 3.0 is arranged vertically facing said protrusion 1.02 (Figure 8), the protrusion 1.02 prevents the vertical movement of the sealing assembly when said movable element 3.0 and said protrusion 1.02 come into contact. This is not the case when the movable element 3.0 is in another adjustment position, given that it is not arranged facing said protrusion 1.02 and an additional axial movement of the sealing assembly, for example, until the movable element 3.0 contacts the inner wall 1.01 of the box 1.0, is allowed. Figure 7 shows this adjustment mechanism for a sealing plate 1.1 and Figure 8 shows said adjustment mechanism for another sealing plate 1.1.

The sealing tool 1 comprises actuation means 200 (cylinders, for example) configured for causing an axial movement with respect to the central axis 1.09 of the box 1.0, and in some embodiments such as the one shown in Figure 3 or in Figure 7, for example, the stroke of said actuation means demarcates the maximum travel of the sealing assembly, preventing the movable element 3.0 from contacting the inner wall 1.01 of said box 1.0 with said movable element 3.0 in one of the adjustment positions. In some embodiments, the movable element 3.0 is housed in the recess 1.03 without contacting the inner wall 1.01 of the box 1.0 (Figure 3), and in other embodiments, when the movable element 3.0 is not facing the protrusion 1.02, said movable element 3.0 does not contact the inner wall 1.01 either as the actuation elements complete their travel beforehand (Figure 7). In some embodiments, the protrusion 1.02 or the recess 1.03 of the box 1.0 is made in the side walls of the box 1.0.

In some embodiments in which the movable element 3.0 is attached with freedom of movement to the heating plate 1.2, said movable element 3.0 is configured for moving axially with respect to said heating plate 1.2 during an axial movement of the heating plate 1.2 and/or of the sealing plate 1.1 with respect to the central axis 1.09 of the box 1.0, such that the adjustment of the first predetermined distance D1.1 of the corresponding sealing plate 1.1 is performed automatically. In other embodiments, the movable element 3.0 could be moved manually.

When replacing a sealing plate 1.1 with another sealing plate 1.1, said new sealing plate 1.1 must be coupled to the heating plate 1.2. In some embodiments, to make this replacement easier, first the sealing assembly is moved axially with respect to the central axis 1.09 of the box 1.0 from its initial operating position, so as bring the sealing plate 1.1 to be replaced closer to the lower part of the box 1.0. Therefore, later on, the new sealing plate 1.1 and the heating plate 1.2 must be moved axially again with respect to the box 1.0, in the opposite direction (towards the inner wall 1.01 of the box 1.0), so that the sealing assembly formed by the heating plate 1.2 and the new sealing plate 1.1 is positioned in the initial operating position. This last movement can be carried out in different ways, for example:
- The new sealing plate 1.1 is coupled to the heating plate 1.2 forming the sealing assembly, and said sealing assembly is moved to its initial operating position (joint movement of the plates 1.1 and 1.2).
- The new sealing plate 1.1 is coupled to the heating plate 1.2 when both plates 1.1 and 1.2 move axially with respect to the central axis 1.09 of the box 1.0 towards the inner wall 1.01 of the box 1.0.

In some embodiments, the adjustment mechanism allows correctly positioning the sealing assembly during the movement required to arrange the new sealing assembly back in the initial operating position after replacing one sealing plate 1.1 with another sealing plate 1.1, making the task easier for the user who only needs to replace one sealing plate 1.1 with another sealing plate 1.1 (the user does not have to perform any additional operation for positioning the heating plate 1.2 in the corresponding initial position because this operation is performed automatically as a result of the adjustment mechanism).

Preferably, the movable element 3.0 is furthermore configured for moving with respect to the heating plate 1.2 when it is actuated by the sealing plate 1.1. This means that the sealing plate 1.1 itself is configured, based on its given first distance D1.1, to move the movable element 3.0 to the required adjustment position.

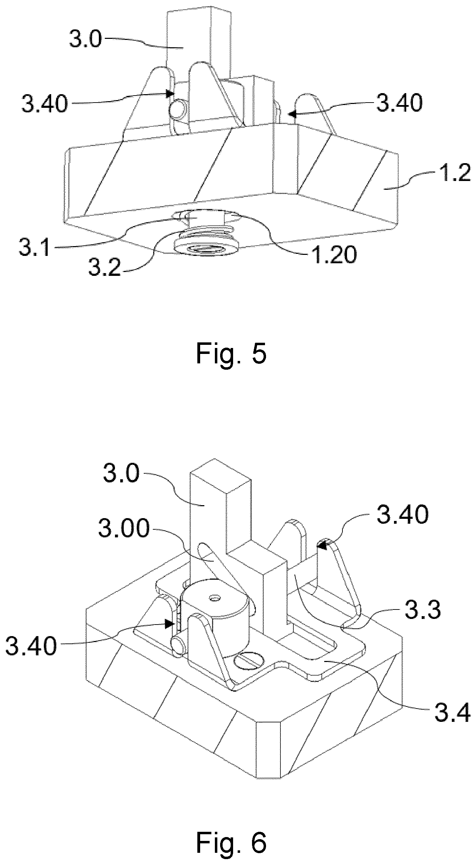

In a preferred embodiment (see Figures 2 to 6), the adjustment mechanism comprises a movable element 3.0 moved by the sealing plate 1.1. The heating plate 1.2 comprises an adjustment through hole 1.20 arranged axially with respect to the central axis 1.09 of the box 1.0, see Figure 5, and the adjustment mechanism further comprises an adjustment rod 3.1 movable through the adjustment through hole 1.20. The adjustment mechanism is configured so that the adjustment rod 3.1 acts on the movable element 3.0 as it moves through said first through hole 1.20. The adjustment rod 3.1 is attached to the heating plate 1.2 with freedom of axial movement, is housed at least partially in the adjustment through hole 1.20, and is facing the sealing plate 1.1 (although in other embodiments, it may be attached to the sealing plate 1.1). The axial movement is with respect to the central axis 1.09 of the box 1.0. When the sealing plate 1.1 contacts the adjustment rod 3.1 when said sealing plate 1.1 moves axially with respect to the central axis 1.09 of the box 1.0, said sealing plate 1.1 pushes said adjustment rod 3.1 as it continues moving forward, until said sealing plate 1.1 reaches the position with respect to the heating plate 1.2 which corresponds to the position in which both plates 1.1 and 1.2 are coupled to one another. When the adjustment rod 3.1 is pushed, said adjustment rod 3.1 is moved through the adjustment through hole 1.20 and causes a transverse movement of the movable element 3.0 with respect to the central axis 1.09 of the box 1.0, with said movable element 3.0 being arranged in the adjustment position required for the corresponding sealing plate 1.1.

The adjustment mechanism preferably comprises a spring 3.2 wound around the adjustment rod 3.1, such that it is compressed or decompressed when the adjustment rod 3.1 contacts the sealing plate 1.1. When the adjustment rod 3.1 is moved, pushed by the sealing plate 1.1, the spring 3.2 is compressed, and when the sealing plate 1.1 is no longer in contact with the adjustment rod 3.1, the spring 3.2 is decompressed, causing said adjustment rod 3.1 to return to its original position.

The movable element 3.0 comprises a groove 3.00 that is inclined and defines an angle smaller than 90° with respect to the central axis 1.09 of the box 1.0, and the adjustment mechanism comprises an actuation element 3.3 attached to the adjustment rod 3.1 and integrally movable with said adjustment rod 3.1. The actuation element 3.3 is housed partially in the groove 3.00 and is suitable for being moved with respect to said groove 3.00, such that when the actuation element 3.3 is moved, said actuation element 3.3 pushes the movable element 3.0 (presses on a wall of the groove 3.00), generating a transverse movement of the movable element 3.0 with respect to the central axis 1.09 of the box 1.0.

Preferably, the adjustment mechanism further comprises a guiding element 3.4 attached to an upper surface of the heating plate 1.2 and configured for guiding said transverse movement of the movable element 3.0 and preventing the axial movement (with respect to the central axis 1.09 of the box 1.0 of said movable element 3.0 with respect to the heating plate 1.2. In some embodiments, the heating plate 1.2 comprises a groove arranged on an upper surface, the guiding element 3.4 comprises a base arranged partially in said groove, and the movable element 3.0 comprises a lower end housed in said groove and configured for moving through said groove, said end of the movable element 3.0, said groove of the heating plate 1.2, and said base of the guiding element 3.4 comprising complementary configurations which allow a transverse movement of the movable element 3.0 through said rail with respect to the central axis 1.09 of the box 1.0, and prevent the axial movement of the movable element 3.0 with respect to the central axis 1.09 of the box 1.0.

The guiding element 3.4 is configured for guiding the axial movement of the actuation element 3.3 (see Figures 5 and 6) and preventing the transverse movement of said actuation element 3.3. Preferably, guiding element 3.4 defines at least one U-shaped housing 3.40 in which the actuation element 3.3 is partially housed, said U shape preventing a transverse movement of said actuation element 3.3. Preferably, the guiding element 3.4 comprises a respective housing 3.40 for each end of the actuation element 3.3, which can be a rod.

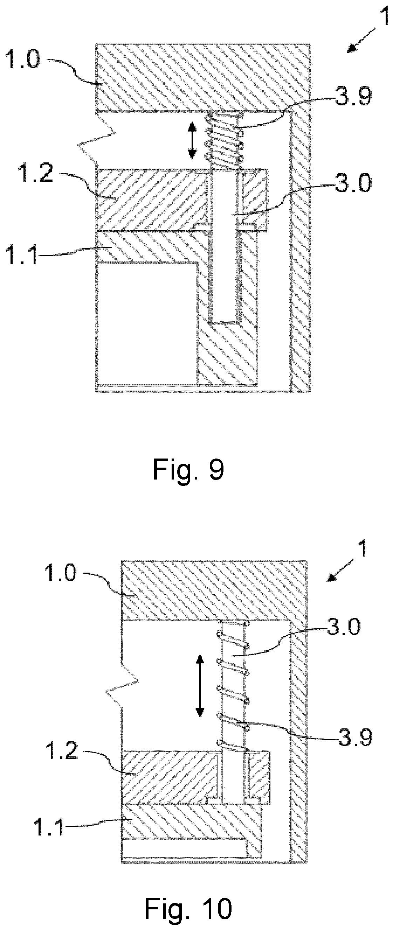

In some embodiments such as those shown in Figures 9 and 10, the movable element 3.0 of the adjustment mechanism is also moved by the sealing plate 1.1, in this case in an axial direction with respect to the central axis 1.09 of the box 1.0. The movable element 3.0 is attached to the heating plate 1.2 with freedom of axial movement and goes through said heating plate 1.2, and it comprises a contact surface projecting from said heating plate 1.2 towards the wall 1.01 of the box 1.0. The adjustment mechanism further comprises a spring 3.9 wound on the movable element 3.0 to cause said movable element 3.0 to return to its initial position once the sealing plate 1.1 no longer acts on said movable element 3.0. Figure 9 shows this adjustment mechanism for one sealing plate 1.1 and Figure 10 shows said adjustment mechanism for another sealing plate 1.1.

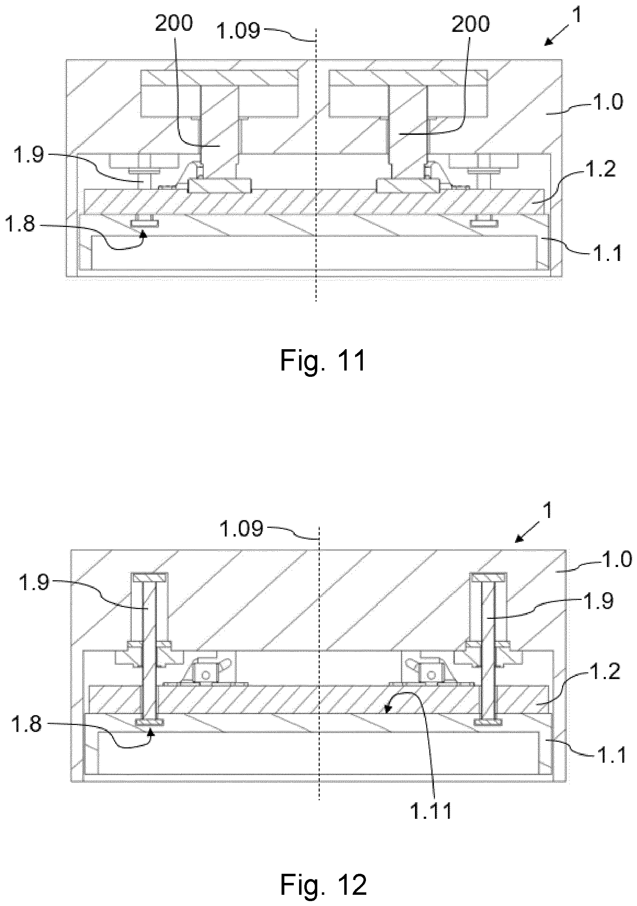

The upper sealing tool 1 comprises actuation means 200 fixed to the box 1.0 and attached to the heating plate 1.2, as shown in Figure 11, said actuation means 200 being configured for causing an axial movement of the sealing assembly, with respect to the central axis 1.09 of the box 1.0, from the initial operating position to a final operating position. The actuation means 200 thereby allow sealing processes in those packaging operations which require an axial movement of the sealing assembly with respect to the central axis 1.09 of the box 1.0 to perform each sealing. The actuation means 200 may comprise an actuator fixed to the box 1.0 and attached to the heating plate 1.2, such as a pneumatic cylinder, for example.

The sealing plate 1.1 can be replaced, and to that end it is attached in a detachable manner to the heating plate 1.2. The upper sealing tool 1 comprises detachment means allowing this detachment. Said detachment means are configured for causing an axial movement of the sealing plate 1.1 with respect to the heating plate 1.2 in an axial direction with respect to the central axis 1.09 of the box 1.0, and the sealing plate 1.1 is attached to said detachment means with freedom of transverse movement with respect to said axial movement. Therefore, the sealing plate 1.1 can be separated from the heating plate 1.2 for replacement as a result of said axial movement, and it can be removed from the coupling means as a result of said transverse movement.

The sealing plate 1.1 comprises an upper surface 1.11 facing the heating plate 1.2 (and in contact with said heating plate 1.2 when the sealing assembly is in the initial operating position), and said upper surface 1.11 comprises a groove transverse to the central axis 1.09 of the box 1.0. The detachment means comprise a detachment rod 1.9 going through a detachment through hole of the heating plate 1.2, as shown in Figure 12. The detachment rod 1.9 can be moved axially with respect to the central axis 1.09 of the box 1.0 through said detachment through hole and is attached in a detachable manner to the sealing plate 1.1. The detachment rod 1.9 comprises an end housed in said groove of the sealing plate 1.1, said end and said groove comprising complementary configurations allowing an integral axial movement, with respect to the central axis 1.09 of the box 1.0, of said detachment rod 1.9 and said sealing plate 1.1, and a transverse movement, with respect to the central axis 1.09 of the box 1.0, of said sealing plate 1.1 with respect to said detachment rod 1.9, said detachment rod 1.9 thereby being attached in a detachable manner to the sealing plate 1.1.

## Claims

1. Sealing tool of a packaging machine, the sealing tool (1) comprising a box (1.0) with a central axis (1.09), an inner wall (1.01) defining a closed contour and a lower base (1.00), and a sealing assembly which is housed in the box (1.0) and formed by at least one sealing plate (1.1) comprising a lower surface (1.10) and a heating plate (1.2) configured for heating said sealing plate (1.1), the heating plate (1.2) being arranged, in an initial position with respect to the box (1.0), on the sealing plate (1.1), attached to said sealing plate (1.1), with the sealing assembly in an initial operating position, and the lower surface (1.10) of the sealing plate (1.1) being arranged at a first distance (D1.1), predetermined for said sealing plate (1.1), with respect to the lower base (1.00) of the box (1.0), with said sealing assembly in the initial operating position, the sealing plate (1.1) and the heating plate (1.2) being attached to one another in a detachable manner, such that the sealing plate (1.1) of the sealing assembly can be replaced with another sealing plate (1.1), the sealing tool (1) comprising an adjustment mechanism configured for adjusting the initial position of the heating plate (1.2) of the sealing assembly with respect to the box (1.0), such that the lower surface (1.10) of the sealing plate (1.1) of said sealing assembly is arranged at the corresponding first predetermined distance (D1.1) with respect to the lower base (1.00) of said box (1.0), with said sealing assembly in the initial operating position, **characterized in that** the adjustment mechanism comprises a movable element (3.0) attached with freedom of movement to the heating plate (1.2), said movable element (3.0) being configured for being arranged in at least a first adjustment position and a second adjustment position with respect to said heating plate (1.2), said movable element (3.0) being configured for cooperating with the box (1.0) in at least one of said adjustment positions and each of said adjustment positions being associated with a corresponding initial position of said heating plate (1.2).

2. Sealing tool according to claim 1, wherein the adjustment mechanism is configured to enable arranging the heating plate (1.2) in a plurality of different initial positions, each initial position being associated with a given sealing plate (1.1) and a lower surface (1.21) of said heating plate (1.2) being arranged at a corresponding second distance (D1.2) with respect to the lower base (1.00) of said box (1.0), in each of said initial positions.

3. Sealing tool according to claim 1 or 2, wherein the box (1.0) comprises a recess (1.03) in the inner wall (1.01) suitable for at least partially housing the movable element (3.0), when said movable element (3.0) is in the first adjustment position or in the second adjustment position, or wherein the box (1.0) comprises a protrusion (1.02) in the inner wall (1.01) suitable for contacting the movable element (3.0) when said movable element (3.0) is in the first adjustment position or in the second adjustment position.

4. Sealing tool according to any of claims 1 to 3, wherein the movable element (3.0) is configured for moving with respect to the heating plate (1.2), during an axial movement of the heating plate (1.2) and/or of the sealing plate (1.1) with respect to the central axis (1.09) of the box (1.0).

5. Sealing tool according to any of claims 1 to 4, wherein the movable element (3.0) is configured for moving with respect to the heating plate (1.2) when it is actuated by the sealing plate (1.1), the sealing plate (1.1) being configured for acting on said movable element (3.0) based on the first predetermined distance (D1.1) associated with said sealing plate (1.1).

6. Sealing tool according to any of claims 1 to 5, wherein the heating plate (1.2) comprises an adjustment through hole (1.20) arranged axially with respect to the central axis (1.09) of the box (1.0) and the adjustment mechanism comprises an adjustment rod (3.1) that can be moved through the adjustment through hole (1.20), the adjustment mechanism being configured so that the adjustment rod (3.1) acts on the movable element (3.0) as it moves through said adjustment through hole (1.20), and said adjustment rod (3.1) being attached to the heating plate (1.2) with freedom of axial movement with respect to the central axis (1.09) of the box (1.0), housed at least partially in the adjustment through hole (1.20) of said heating plate (1.2) and facing the sealing plate (1.1), or said adjustment rod (3.1) being attached to the sealing plate (1.1).

7. Sealing tool according to claim 6, wherein the adjustment rod (3.1) is attached to the heating plate (1.2) with freedom of axial movement with respect to the central axis (1.09) of the box (1.0), is housed at least partially in the adjustment through hole (1.20) of said heating plate (1.2), and is facing the sealing plate (1.1), the adjustment mechanism comprising a spring (3.2) wound around the adjustment rod (3.1) such that it is compressed when the adjustment rod (3.1) contacts the sealing plate (1.1).

8. Sealing tool according to claim 7, wherein the movable element (3.0) comprises a groove (3.00) that is inclined and defines an angle smaller than 90° with respect to the central axis (1.09) of the box (1.0) and the adjustment mechanism comprises an actuation element (3.3) attached to the adjustment rod (3.1) and integrally movable with said adjustment rod (3.1), the actuation element (3.3) being housed partially in the groove (3.00).

9. Sealing tool according to claim 8, wherein the adjustment mechanism comprises a guiding element (3.4) attached to an upper surface of the heating plate (1.2), configured for preventing the axial movement of the movable element (3.0) with respect to the heating plate (1.2) and for guiding the transverse movement of said movable element (3.0).

10. Sealing tool according to claim 9, wherein the guiding element (3.4) is configured for guiding the axial movement of the actuation element (3.3) and preventing the transverse movement of said actuation element (3.3).

11. Sealing tool according to any of claims 1 to 10, comprising actuation means configured for causing an axial movement of the sealing assembly, with respect to the central axis (1.09) of the box (1.0), from the initial operating position of said sealing assembly to a final operating position of said sealing assembly, and detachment means configured for causing a movement of the sealing plate (1.1) with respect to the heating plate (1.2), said movement being an axial movement with respect to the central axis (1.09) of the box (1.0), the sealing plate (1.1) being attached to said detachment means with freedom of transverse movement with respect to said axial movement.

12. Sealing tool according to claim 11, wherein the detachment means comprise a detachment rod (1.9) going through a detachment through hole of the heating plate (1.2), which is axially movable with respect to the central axis (1.09) of the box (1.0) through said detachment through hole and attached in a detachable manner to the sealing plate (1.1).

13. Sealing tool according to claim 12, wherein the sealing plate (1.1) comprises an upper surface (1.11) facing the heating plate (1.2) and said upper surface (1.11) comprises a groove transverse to the central axis (1.09) of the box (1.0), the detachment rod (1.9) comprising an end with a configuration complementary to said groove, such that an axial movement of the detachment rod (1.9) with respect to the central axis (1.09) of the box (1.0) causes an axial movement of said sealing plate (1.1), and said sealing plate (1.1) can move with respect to said detachment rod (1.9).

14. Packaging machine **characterized in that** it comprises a sealing tool (1) according to any of the preceding claims.

## Patentansprüche

1. Versiegelungswerkzeug einer Verpackungsmaschine, wobei das Versiegelungswerkzeug (1) einen Kasten (1.0) mit einer Mittelachse (1.09), wobei eine Innenwand (1.01) eine geschlossene Kontur und eine untere Basis (1.00) definiert, und eine Versiegelungsbaugruppe, welche im Kasten (1.0) aufgenommen ist und aus mindestens einer Versiegelungsplatte (1.1), welche eine untere Oberfläche (1.10) umfasst, und eine Heizplatte (1.2), welche zum Heizen der genannten Versiegelungsplatte (1.1) ausgebildet ist, gebildet ist, umfasst, wobei die Heizplatte (1.2), in einer Anfangsposition in Bezug auf den Kasten (1.0), auf der Versiegelungsplatte (1.1) angeordnet ist, an der genannten Versiegelungsplatte (1.1) befestigt, mit der Versiegelungsbaugruppe in einer anfänglichen Betriebsposition, und wobei die untere Oberfläche (1.10) der Versiegelungsplatte (1.1) mit einem ersten Abstand (D1.1), vorbestimmt für die genannte Versiegelungsplatte (1.1), in Bezug auf die untere Basis (1.00) des Kastens (1.0) angeordnet ist, mit der genannten Versiegelungsbaugruppe in der anfänglichen Betriebsposition, wobei die Versiegelungsplatte (1.1) und die Heizplatte (1.2) aneinander lösbar befestigt sind, sodass die Versiegelungsplatte (1.1) der Versiegelungsbaugruppe durch eine andere Versiegelungsplatte (1.1) ersetzt werden kann, wobei das Versiegelungswerkzeug (1) einen Einstellmechanismus umfasst, welcher dazu ausgebildet ist, die Anfangsposition der Heizplatte (1.2) der Versiegelungsbaugruppe in Bezug auf den Kasten (1.0) einzustellen, sodass die untere Oberfläche (1.10) der Versiegelungsplatte (1.1) der genannten Versiegelungsbaugruppe mit dem entsprechenden ersten vorbestimmten Abstand (D1.1) in Bezug auf die untere Basis (1.00) des genannten Kastens (1.0) angeordnet ist, mit der genannten Versiegelungsbaugruppe in der anfänglichen Betriebsposition, **dadurch gekennzeichnet, dass** der Einstellmechanismus ein bewegliches Element (3.0) umfasst, welches mit Bewegungsfreiheit an der Heizplatte (1.2) befestigt ist, wobei das genannte bewegliche Element (3.0) dazu ausgebildet ist, in mindestens einer ersten Einstellposition und einer zweiten Einstellposition in Bezug auf die genannte Heizplatte (1.2) angeordnet zu werden, wobei das genannte bewegliche Element (3.0) dazu ausgebildet ist, mit dem Kasten (1.0) in mindestens einer der genannten Einstellpositionen zusammenzuwirken und wobei jede der genannten Einstellpositionen mit einer entsprechenden Anfangsposition der genannten Heizplatte (1.2) assoziiert ist.

2. Versiegelungswerkzeug nach Anspruch 1, wobei der Einstellmechanismus dazu ausgebildet ist, das Anordnen der Heizplatte (1.2) in einer Vielzahl von unterschiedlichen Anfangspositionen zu ermöglichen, wobei jede Anfangsposition mit einer gegebenen Versiegelungsplatte (1.1) assoziiert ist und eine untere Oberfläche (1.21) der genannten Heizplatte (1.2) mit einem entsprechenden zweiten Abstand (D1.2) in Bezug auf die untere Basis (1.00) des genannten Kastens (1.0), in jeder der genannten Anfangspositionen, angeordnet ist.

3. Versiegelungswerkzeug nach Anspruch 1 oder 2, wobei der Kasten (1.0) eine Aussparung (1.03) in der Innenwand (1.01) umfasst, welche dafür geeignet ist, mindestens teilweise das bewegliche Element (3.0) aufzunehmen, wenn das genannte bewegliche Element (3.0) in der ersten Einstellposition oder in der zweiten Einstellposition ist, oder wobei der Kasten (1.0) einen Vorsprung (1.02) in der Innenwand (1.01) umfasst, welcher dafür geeignet ist, mit dem beweglichen Element (3.0) in Kontakt zu kommen, wenn das genannte bewegliche Element (3.0) in der ersten Einstellposition oder in der zweiten Einstellposition ist.

4. Versiegelungswerkzeug nach einem der Ansprüche 1 bis 3, wobei das bewegliche Element (3.0) dazu ausgebildet ist, sich in Bezug auf die Heizplatte (1.2) während einer Axialbewegung der Heizplatte (1.2) und/oder der Versiegelungsplatte (1.1) in Bezug auf die Mittelachse (1.09) des Kastens (1.0) zu bewegen.

5. Versiegelungswerkzeug nach einem der Ansprüche 1 bis 4, wobei das bewegliche Element (3.0) dazu ausgebildet ist, sich in Bezug auf die Heizplatte (1.2) zu bewegen, wenn es von der Versiegelungsplatte (1.1) betätigt wird, wobei die Versiegelungsplatte (1.1) dazu ausgebildet ist, auf das genannte bewegliche Element (3.0) basierend auf dem ersten vorbestimmten Abstand (D1.1), welcher mit der genannten Versiegelungsplatte (1.1) assoziiert ist, zu wirken.

6. Versiegelungswerkzeug nach einem der Ansprüche 1 bis 5, wobei die Heizplatte (1.2) ein Einstelldurchgangsloch (1.20) umfasst, welches in Bezug auf die Mittelachse (1.09) des Kastens (1.0) axial angeordnet ist, und der Einstellmechanismus eine Einstellstange (3.1) umfasst, welche durch das Einstelldurchgangsloch (1.20) bewegt werden kann, wobei der Einstellmechanismus derart ausgebildet ist, dass die Einstellstange (3.1) auf das bewegliche Element (3.0) wirkt, während es sich durch das genannte Einstelldurchgangsloch (1.20) bewegt, und wobei die genannte Einstellstange (3.1) an der Heizplatte (1.2) mit axialer Bewegungsfreiheit in Bezug auf die Mittelachse (1.09) des Kastens (1.0) befestigt ist, mindestens teilweise im Einstelldurchgangsloch (1.20) der genannten Heizplatte (1.2) aufgenommen und der Versiegelungsplatte (1.1) zugewandt, oder wobei die genannte Einstellstange (3.1) an der Versiegelungsplatte (1.1) befestigt ist.

7. Versiegelungswerkzeug nach Anspruch 6, wobei die Einstellstange (3.1) an der Heizplatte (1.2) mit axialer Bewegungsfreiheit in Bezug auf die Mittelachse (1.09) des Kastens (1.0) befestigt ist, mindestens teilweise im Einstelldurchgangsloch (1.20) der genannten Heizplatte (1.2) aufgenommen ist und der Versiegelungsplatte (1.1) zugewandt ist, wobei der Einstellmechanismus eine Feder (3.2) umfasst, welche um die Einstellstange (3.1) herum gewickelt ist, sodass sie zusammengedrückt wird, wenn die Einstellstange (3.1) mit der Versiegelungsplatte (1.1) in Kontakt kommt.

8. Versiegelungswerkzeug nach Anspruch 7, wobei das bewegliche Element (3.0) eine Nut (3.00) umfasst, welche geneigt ist und einen Winkel kleiner als 90° in Bezug auf die Mittelachse (1.09) des Kastens (1.0) definiert, und der Einstellmechanismus ein Betätigungselement (3.3) umfasst, welches an der Einstellstange (3.1) befestigt ist und integral mit der genannten Einstellstange (3.1) bewegt werden kann, wobei das Betätigungselement (3.3) teilweise in der Nut (3.00) aufgenommen ist.

9. Versiegelungswerkzeug nach Anspruch 8, wobei der Einstellmechanismus ein Führungselement (3.4) umfasst, welches an einer oberen Oberfläche der Heizplatte (1.2) befestigt ist und welches dazu ausgebildet ist, die Axialbewegung des beweglichen Elements (3.0) in Bezug auf die Heizplatte (1.2) zu verhindern und die Querbewegung des genannten beweglichen Elements (3.0) zu führen.

10. Versiegelungswerkzeug nach Anspruch 9, wobei das Führungselement (3.4) dazu ausgebildet ist, die Axialbewegung des Betätigungselements (3.3) zu führen und die Querbewegung des genannten Betätigungselements (3.3) zu verhindern.

11. Versiegelungswerkzeug nach einem der Ansprüche 1 bis 10, umfassend Betätigungsmittel, welche dazu ausgebildet sind, eine Axialbewegung der Versiegelungsbaugruppe, in Bezug auf die Mittelachse (1.09) des Kastens (1.0), von der anfänglichen Betriebsposition der genannten Versiegelungsbaugruppe zu einer endgültigen Betriebsposition der genannten Versiegelungsbaugruppe zu bewirken, und Freisetzungsmittel, welche dazu ausgebildet sind, eine Bewegung der Versiegelungsplatte (1.1) in Bezug auf die Heizplatte (1.2) zu bewirken, wobei die genannte Bewegung eine Axialbewegung in Bezug auf die Mittelachse (1.09) des Kastens (1.0) ist, wobei die Versiegelungsplatte (1.1) an den genannten Freisetzungsmitteln mit Bewegungsfreiheit in Querrichtung in Bezug auf die genannte Axialbewegung befestigt ist.

12. Versiegelungswerkzeug nach Anspruch 11, wobei die Freisetzungsmittel eine Freisetzungsstange (1.9) umfassen, welche durch ein Freisetzungsdurchgangsloch der Heizplatte (1.2) durchgeht, welche axial in Bezug auf die Mittelachse (1.09) des Kastens (1.0) durch das genannte Freisetzungsdurchgangsloch beweglich ist und lösbar an der Versiegelungsplatte (1.1) befestigt ist.

13. Versiegelungswerkzeug nach Anspruch 12, wobei die Versiegelungsplatte (1.1) eine obere Oberfläche (1.11) umfasst, welche der Heizplatte (1.2) zugewandt ist, und die genannte obere Oberfläche (1.11) eine Nut quer zur Mittelachse (1.09) des Kastens (1.0) umfasst, wobei die Freisetzungsstange (1.9) ein Ende mit einer zur genannten Nut komplementären Konfiguration umfasst, sodass eine Axialbewegung der Freisetzungsstange (1.9) in Bezug auf die Mittelachse (1.09) des Kastens (1.0) eine Axialbewegung der genannten Versiegelungsplatte (1.1) bewirkt, und sich die genannte Versiegelungsplatte (1.1) in Bezug auf die genannte Freisetzungsstange (1.9) bewegen kann.

14. Verpackungsmaschine **dadurch gekennzeichnet, dass** sie ein Versiegelungswerkzeug (1) nach einem der vorhergehenden Ansprüche umfasst.

## Revendications

1. Outil de scellage d'une machine d'emballage, l'outil de scellage (1) comprenant un boîtier (1.0) avec un axe central (1.09), une paroi intérieure (1.01) définissant un contour fermé et une base inférieure (1.00), et un ensemble de scellage qui est logé dans le boîtier (1.0) et formé par au moins une plaque de scellage (1.1) comprenant une surface inférieure (1.10) et une plaque chauffante (1.2) configurée pour chauffer ladite plaque de scellage (1.1), la plaque chauffante (1.2) étant disposée, dans une position initiale par rapport au boîtier (1.0), sur la plaque de scellage (1.1), fixée à ladite plaque de scellage (1.1), avec l'ensemble de scellage dans une position initiale de fonctionnement, et la surface inférieure (1.10) de la plaque de scellage (1.1) étant disposée à une première distance (D1.1), prédéterminée pour ladite plaque de scellage (1.1), par rapport à la base inférieure (1.00) du boîtier (1.0), avec ledit ensemble de scellage dans la position initiale de fonctionnement, la plaque de scellage (1.1) et la plaque chauffante (1.2) étant fixées l'une à l'autre de manière détachable, de telle sorte que la plaque de scellage (1.1) de l'ensemble de scellage puisse être remplacée avec une autre plaque de scellage (1.1), l'outil de scellage (1) comprenant un mécanisme d'ajustement configuré pour ajuster la position initiale de la plaque chauffante (1.2) de l'ensemble de scellage par rapport au boîtier (1.0), de sorte que la surface inférieure (1.10) de la plaque de scellage (1.1) dudit ensemble de scellage soit disposée à la première distance prédéterminée correspondante (D1.1) par rapport à la base inférieure (1.00) dudit boîtier (1.0), avec ledit ensemble de scellage dans la position initiale de fonctionnement, **caractérisé en ce que** le mécanisme d'ajustement comprend un élément déplaçable (3.0) fixé avec liberté de déplacement à la plaque chauffante (1.2), ledit élément déplaçable (3.0) étant configuré pour être disposé dans au moins une première position d'ajustement et une deuxième position d'ajustement par rapport à ladite plaque chauffante (1.2), ledit élément déplaçable (3.0) étant configuré pour coopérer avec le boîtier (1.0) dans au moins une desdites positions d'ajustement et chacune desdites positions d'ajustement étant associée à une position initiale correspondante de ladite plaque chauffante (1.2).

2. Outil de scellage selon la revendication 1, dans lequel le mécanisme d'ajustement est configuré pour permettre de disposer la plaque chauffante (1.2) dans une pluralité de positions initiales différentes, chaque position initiale étant associée avec une plaque de scellage (1.1) et une surface inférieure (1.21) de ladite plaque chauffante (1.2) étant disposée à une seconde distance correspondante (D1.2) par rapport à la base inférieure (1.00) dudit boîtier (1.0), dans chacune desdites positions initiales.

3. Outil de scellage selon la revendication 1 ou 2, dans lequel le boîtier (1.0) comprend un renfoncement (1.03) dans la paroi intérieure (1.01) adapté pour au moins partiellement loger l'élément déplaçable (3.0), lorsque ledit élément déplaçable (3.0) est dans la première position d'ajustement ou dans la deuxième position d'ajustement, ou dans lequel le boîtier (1.0) comprend une protubérance (1.02) dans la paroi intérieure (1.01) adapté pour être en contact avec l'élément déplaçable (3.0) lorsque ledit élément déplaçable (3.0) est dans la première position d'ajustement ou dans la deuxième position d'ajustement.

4. Outil de scellage selon l'une quelconque des revendications 1 à 3, dans lequel l'élément déplaçable (3.0) est configuré pour se déplacer par rapport à la plaque chauffante (1.2), durant un déplacement axial de la plaque chauffante (1.2) et/ou de la plaque de scellage (1.1) par rapport à l'axe central (1.09) du boîtier (1.0).

5. Outil de scellage selon l'une quelconque des revendications 1 à 4, dans lequel l'élément déplaçable (3.0) est configuré pour se déplacer par rapport à la plaque chauffante (1.2) lorsqu'il est actionné par la plaque de scellage (1.1), la plaque de scellage (1.1) étant configurée pour agir sur ledit élément déplaçable (3.0) basé sur la première distance prédéterminée (D1.1) associée avec ladite plaque de scellage (1.1).

6. Outil de scellage selon l'une quelconque des revendications 1 à 5, dans lequel la plaque chauffante (1.2) comprend un orifice traversant d'ajustement (1.20) disposé axialement par rapport à l'axe central (1.09) du boîtier (1.0) et le mécanisme d'ajustement comprend une tige d'ajustement (3.1) qui peut être déplacée à travers l'orifice traversant d'ajustement (1.20), le mécanisme d'ajustement étant configuré de telle sorte que la tige d'ajustement (3.1) agit sur l'élément déplaçable (3.0) comme il se déplace à travers ledit orifice traversant de passage d'ajustement (1.20), et ladite tige d'ajustement (3.1) étant fixée à la plaque chauffante (1.2) avec liberté de déplacement axial par rapport à l'axe central (1.09) du boîtier (1.0), logée au moins partiellement dans l'orifice traversant d'ajustement (1.20) de ladite plaque chauffante (1.2) et faisant face à la plaque de scellage (1.1), ou ladite tige d'ajustement (3.1) étant fixée à la plaque de scellage (1.1).

7. Outil de scellage selon la revendication 6, dans lequel la tige d'ajustement (3.1) est fixée à la plaque chauffante (1.2) avec liberté de déplacement axial par rapport à l'axe central (1.09) du boîtier (1.0), est logée au moins partiellement dans l'orifice traversant d'ajustement (1.20) de ladite plaque chauffante (1.2) et fait face à la plaque de scellage (1.1), le mécanisme d'ajustement comprenant un ressort (3.2) enroulé autour de la tige d'ajustement (3.1) de telle sorte qu'il est comprimé lorsque la tige d'ajustement (3.1) est en contact avec la plaque de scellage (1.1).

8. Outil de scellage selon la revendication 7, dans lequel l'élément déplaçable (3.0) comprend une rainure (3.00) qui est inclinée et définit un angle plus petit que 90° par rapport à l'axe central (1.09) du boîtier (1.0) et le mécanisme d'ajustement comprend un élément d'actionnement (3.3) fixé à la tige d'ajustement (3.1) et intégralement déplaçable avec ladite tige d'ajustement (3.1), l'élément d'actionnement (3.3) étant logé partiellement dans la rainure (3.00).

9. Outil de scellage selon la revendication 8, dans lequel le mécanisme d'ajustement comprend un élément guidant (3.4) fixé à une surface supérieure de la plaque chauffante (1.2), configuré pour empêcher le déplacement axial de l'élément déplaçable (3.0) par rapport à la plaque chauffante (1.2) et pour guider le déplacement transversal dudit élément déplaçable (3.0).

10. Outil de scellage selon la revendication 9, dans lequel l'élément guidant (3.4) est configuré pour guider le déplacement axial de l'élément d'actionnement (3.3) et empêcher le déplacement transversal dudit élément d'actionnement (3.3).

11. Outil de scellage selon l'une quelconque des revendications 1 à 10, comprenant des moyens d'actionnement configurés pour causer un déplacement axial de l'ensemble de scellage, par rapport à l'axe central (1.09) du boîtier (1.0), depuis la position initiale de fonctionnement dudit ensemble de scellage à une position finale de fonctionnement dudit ensemble de scellage, et des moyens de détachement configurés pour causer un déplacement de la plaque de scellage (1.1) par rapport à la plaque chauffante (1.2), ledit déplacement étant un déplacement axial par rapport à l'axe central (1.09) du boîtier (1.0), la plaque de scellage (1.1) étant fixée auxdits moyens de détachement avec liberté de déplacement transversal par rapport audit déplacement axial.

12. Outil de scellage selon la revendication 11, dans lequel les moyens de détachement comprennent une tige de détachement (1.9) traversant un orifice traversant de détachement de la plaque chauffante (1.2), qui est déplaçable axialement par rapport à l'axe central (1.09) du boîtier (1.0) à travers ledit orifice traversant de détachement et fixée de manière détachable à la plaque de scellage (1.1).

13. Outil de scellage selon la revendication 12, dans lequel la plaque de scellage (1.1) comprend une surface supérieure (1.11) faisant face à la plaque chauffante (1.2) et ladite surface supérieure (1.11) comprend une rainure transversale à l'axe central (1.09) du boîtier (1.0), la tige de détachement (1.9) comprenant une extrémité avec une configuration complémentaire à ladite rainure, de telle sorte qu'un déplacement axial de la tige de détachement (1.9) par rapport à l'axe central (1.09) du boîtier (1.0) cause un déplacement axial de ladite plaque de scellage (1.1), et que ladite plaque de scellage (1.1) puisse se déplacer par rapport à ladite tige de détachement (1.9).

14. Machine d'emballage **caractérisée en ce qu'**elle comprend un outil de scellage (1) selon l'une quelconque des revendications antérieures.
